# EUROPEAN PATENT SPECIFICATION

(11) **EP 1 657 124 B1**
(45) Date of publication and mention of the grant of the patent: **02.12.2009**
(21) Application number: 05020485.8
(22) Date of filing: 20.09.2005
(51) Int. Cl.: B60R 21/20, B32B 27/20

(54) **Airbag system and interior panel for the same**
Airbaganordnung und Innenverkleidung dafür
Système d'airbag et panneau intérieur de celui-ci

(30) Priority: 12.11.2004 JP 2004329453
(43) Date of publication of application: 17.05.2006
(73) Proprietor: TAKATA CORPORATION, Minato-ku, Tokyo 106-8510 (JP)
(72) Inventor: Hayashi, Shinji c/o Takata Corporation, Tokyo 106-8510 (JP)
(74) Representative: Vossius & Partner

(56) References cited:
- EP-A- 0 275 102
- EP-A- 1 097 805
- EP-A- 1 193 140
- EP-A- 1 369 220
- JP-A- 2001 080 442

## Description

The present invention relates to an airbag system mounted to a car passenger seat or the like, and to an interior panel for the same.

Passenger airbag systems mounted to cars include a folded airbag, a retainer to which the airbag is mounted, an inflator (gas generator) for inflating the airbag, a lid or an instrument-panel door disposed ahead of the retainer, and so on.

When the inflator generates gas, the airbag starts to inflate, so that the lid or the instrument-panel door is cleaved along a tear line and so the airbag deploys into the vehicle cabin, thus protecting a passenger.

It is described in JP-A-2003-137054 to provide an airbag system constructed to open the door of an instrument panel while lifting it into the cabin of the car so that the door of the instrument panel is smoothly opened upon inflation of the airbag.

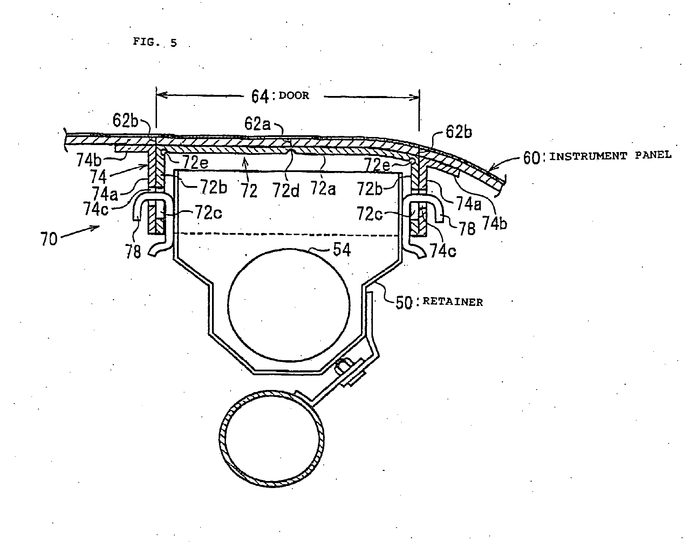

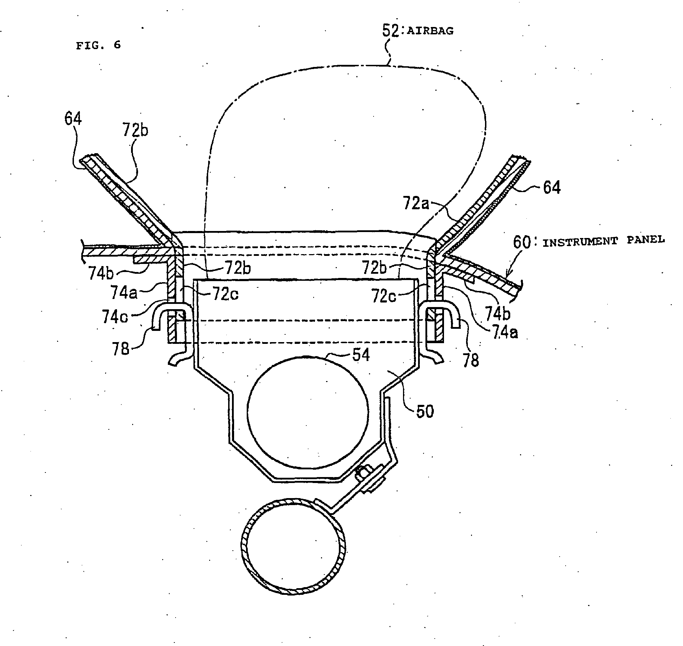

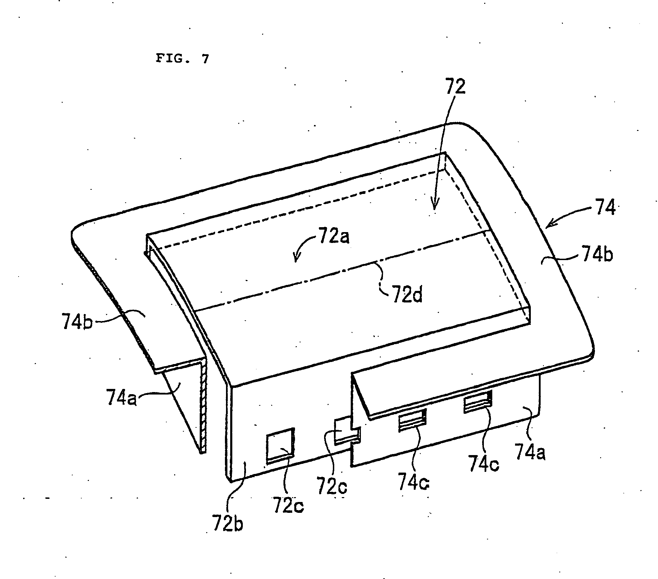

Fig. 5 is a sectional view of the airbag system of the reference. Fig. 6 is a sectional view of the same in operation. Fig. 7 is a perspective view of the door frame of the same.

As shown in Fig. 5, an airbag 52 (see Fig. 6) is accommodated in a top-open container-like retainer 50 in a folded state and can be inflated by an inflator 54.

The upper part of the retainer 50 is covered with an instrument panel 60. The instrument panel 60 has grooved tear lines 62a and 62b. The tear line 62b is provided along the upper rim of the retainer 50. The region inside the tear line 62b is a door 64. The tear line 62a extends to divide the door 64 along the center.

A door frame 70 including a door-frame moving member 72 and a door-frame fixed member 74 is provided on the back of the instrument panel 60. The door-frame fixed member 74 is a rectangular frame, on the inside of which the door-frame moving member 72 is fitted slidably.

The door-frame moving member 72 includes a backing plate 72a that overlays the door 64 of the instrument panel 60 and a leg piece 72b serving as a leg standing downward from both sides of the backing plate 72a. The leg piece 72b has hook holes 72c. The backing plate 72a has a tear line 72b in the position to overlap with the tear line 62a. A hinge groove 72e is cut along the corner at which the backing plate 72a and the leg piece 72b intersect.

The backing plate 72a is secured to the back of the door 64 of the instrument panel 60 by vibration welding.

The door-frame fixed member 74 has a leg frame 74a serving as a rectangular-frame-shaped leg around the outer periphery of the retainer 50 and a flange 74b extending outward from the upper end of the leg frame 74a. The flange 74b is welded to the periphery of the door 64 of the instrument panel 60 by vibration. The leg frame 74a has hook holes 74c.

Hooks 78 fixed to the retainer 50 are inserted into the hook holes 72c and 74c.

When the inflator 54 emits a jet of gas, the airbag 52 inflates to push (lift) the door-frame moving member 72 upward, as shown in Fig. 6. The instrument panel 60 is thus ruptured along the tear line 62b, so that the door 64 is separated from the surrounding instrument panel 60. The door 64 is further moved upward together with the door-frame moving member 72 and pushed by the airbag 52, so that the tear line 72d of the backing plate 72a and the tear line 62a of the door 64 are ruptured. The door 64 is thus divided into two pieces to right and left in Fig. 5 to be opened like a door and as such, the airbag 52 inflates into the cabin.

Since the door 64 is lifted to be separated from the surrounding instrument panel 60, the door 64 is smoothly opened without receiving deforming reaction from the instrument panel 60.

In the airbag system disclosed in the JP-A-2003-137054 shown in Figs. 5 to 7, the instrument panel 60 is ruptured along not only the tear line 62a but also the tear line 62b when the airbag inflates. Accordingly, an object of the invention is to provide an interior panel that is improved to facilitate the rupture and an airbag system including the interior panel.

An interior panel with the features of the preamble of claim 1 is known from EP-A-1 193 140.

An interior panel according to the invention is defined in Claim 1.

In the interior panel and the airbag system having the interior panel of the invention, when subjected to shearing force, the interior panel is relatively quickly ruptured because the outer layer of the interior panel contains inorganic powder. Accordingly, the airbag deploys quickly.

The resin material for the interior panel is preferably thermoplastic polyolefin. The content of the organic powder is preferably from 3 to 15 phr, which facilitates rupturing the interior panel appropriately and gives the interior panel sufficient strength.

The intermediate layer is made of thermoplastic resin containing rubber or elastomer to make it less breakable.

In the airbag system, when the inflator emits a jet of gas, the airbag inflates to push (lift) the door-frame moving member upward. Thus the door 24 is separated from the surrounding instrument panel and is moved upward together with the door-frame moving member to be opened like a door and as such, the airbag inflates into the cabin. Since the door is lifted to be separated from the surrounding interior panel, the door starts to open smoothly without receiving deforming reaction from the surrounding interior panel.

An embodiment of the present invention will be described with reference to the drawings.
Fig. 1 is a cross-sectional view of an interior panel according to an embodiment of the invention;
Fig. 2 is a longitudinal sectional view of an airbag system according to the embodiment of Fig. 1;
Fig. 3 is a sectional view of the airbag in Fig. 2 in operation;
Fig. 4 is an exploded perspective view of the door frame of the airbag system in Fig. 2;
Fig. 5 is a sectional view of an airbag system of a related art;
Fig. 6 is a sectional view of the airbag system of Fig. 5 in operation; and
Fig. 7 is a perspective view of the door frame of airbag system in Fig. 5.

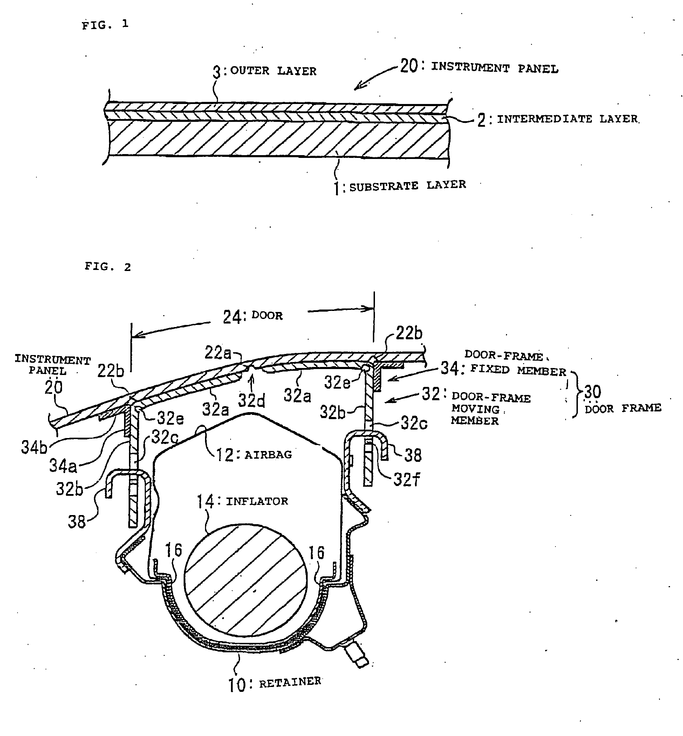

This airbag system is a passenger airbag system mounted to the back of an instrument panel 20. The structure of the instrument panel 20 will first be described with reference to Fig. 1.

The instrument panel 20 has a substrate layer 1, an intermediate layer 2 on the substrate layer 1, and an outer layer 3 on the intermediate layer 2.

The substrate layer 1 constructs the body of the instrument panel 20. The intermediate layer 2 and the outer layer 3 construct an interior layer.

It is preferable that the substrate layer 1 be made of thermoplastic synthetic resin, particularly, thermoplastic polyolefin, and more specifically, polypropylene. The substrate layer 1 may contain reinforcing fiber such as glass fiber.

The intermediate layer 2 gives the interior layer with elasticity and a cracking prevention characteristic at low temperature, increases the bondability between the substrate layer 1 and the outer layer 3, and backs the outer layer 3, and is made of a combination of thermoplastic synthetic resin and rubber or elastomer. When the substrate layer 1 is made of thermoplastic polyolefin such as polypropylene, it is preferable that the elastomer be olefin thermoplastic elastomer or styrene thermoplastic elastomer.

The olefin thermoplastic elastomer may be of a blended type, a polymerized type, a partially crosslinked blended type, a perfectly crosslinked blended type, a halogen- modified polyolefin, a PP/PE alloy, etc.

The styrene thermoplastic elastomer may be a styrene-ethylene-butylene block copolymer (SEBS), a styrene-isoprene block copolymer (SIS), a styrene-butadiene block copolymer (SBS), a styrene-ethylene-propylene block copolymer (SEPS), hydrogen-additive styrene-butadiene rubber (SBR), etc.

The outer layer 3 is a combination of thermoplastic elastomer and inorganic powder. The thermoplastic elastomer may be of the olefin type or the styrene type but is preferably the olefin type. The inorganic powder is preferably clay minerals, and more preferably, talc. The amount of inorganic powder such as talc is preferably from 3 to 15 phr, particularly, from 5 to 10 phr. Since the tearing strength of the outer layer 3 is decreased by blending the inorganic powder such as talc, the instrument panel 20 is easily ruptured when the airbag inflates.

If the amount of inorganic powder such as talc is less than 3 phr, the decrease in tearing strength is insufficient; if more than 15 phr, the outer layer 3 becomes excessively weak.

The instrument panel 20 is manufactured in such a way that, for example, the intermediate layer 2 and the outer layer 3 are formed by two-color molding and are set in a die, into which polypropylene is injected to form the substrate layer 1. The surface of the outer layer 3 may be grained.

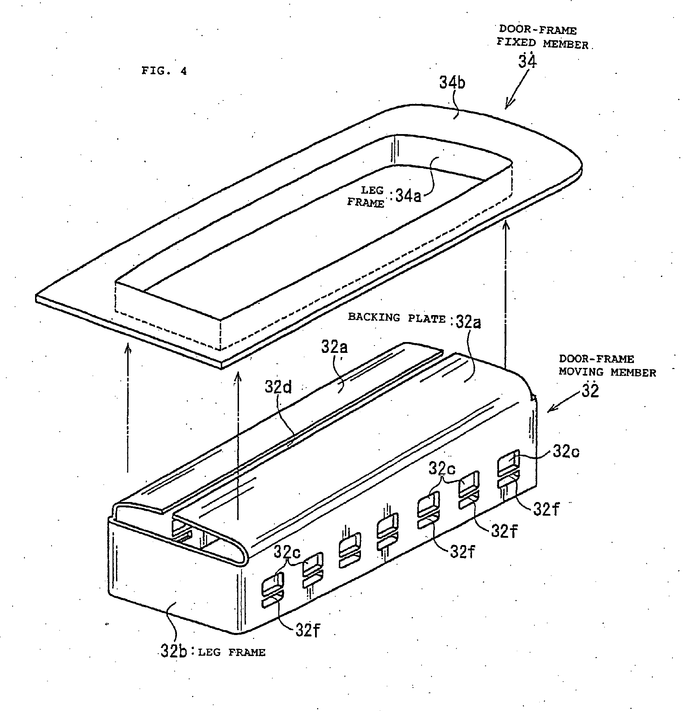

The structure of the airbag system disposed on the back of the instrument panel 20 will then be described with reference to Figs. 2 to 4.

An airbag 12 is accommodated in a top-open container-like retainer 10 in a folded state and can be inflated by an inflator 14. The airbag 12 is fixed to the retainer 10 with a fixing bracket 16.

The upper part of the retainer 10 is covered with an instrument panel 20. The instrument panel 20 has grooved tear lines 22a and 22b. The tear line 22b is disposed along the upper rim of the retainer 10. The region inside the tear line 22b is a door 24. The tear line 22a extends to divide the door 24 along the center.

A door frame 30 including a door-frame moving member 32 and a door-frame fixed member 34 is provided on the back of the instrument panel 20. The door-frame fixed member 34 is a rectangular frame, on the inside of which the door-frame moving member 32 is fitted slidably.

The door-frame moving member 32 includes a rectangular-frame-shaped leg frame 32b serving as a leg and tongue- shaped backing plates 32a and 32a extending from a pair of long sides of the leg frame 32 in the direction in which they come close to each other. The distal ends of the backing plates 32a and 32a in the extending direction face each other with a little space (a slit 32d) therebetween. The backing plates 32a and 32a are secured to the back of the door 24 of the instrument panel 20 by vibration welding. The slit 32d is disposed so as to overlap with the tear line 22a.

The leg frame 32 has hook holes 32c. The hook holes 32c are long in the direction in which the door-frame moving member 32 moves (in the direction perpendicular to the back of the instrument panel 20). In this embodiment, the hook hole 32c has a partition rod 32f halfway in the moving direction of the door-frame moving member 32. Also, a hinge groove 32e is cut along the corner at which the backing plate 32a and the leg frame 32b intersect.

The door-frame fixed member 34 has a rectangular-frame-shaped leg frame 34a around the outer periphery of the retainer 10 and a flange 34b extending outward from the upper end of the leg frame 34a. The flange 34b is welded to the periphery of the door 24 of the instrument panel 20 by vibration. The leg frame 34a is lower in standing height than the leg frame 32b of the door-frame moving member 32, whose lower end does not reach the hook holes 32c.

Hooks 38 fixed to the retainer 10 are inserted into the hook holes 32c.

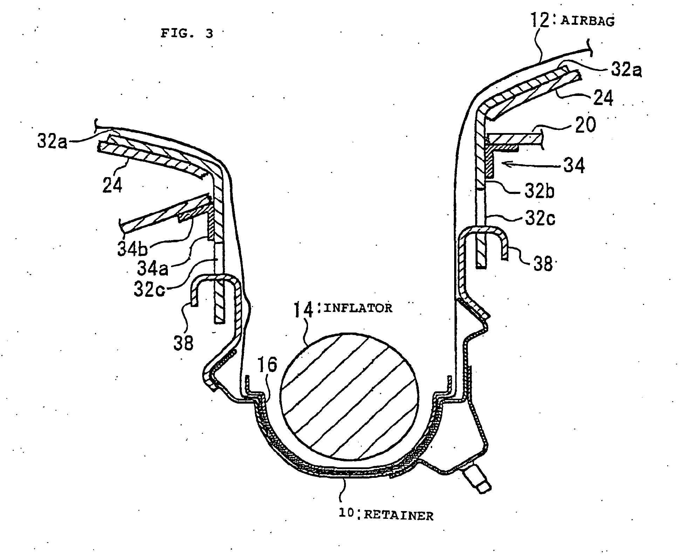

When the inflator 14 emits a jet of gas, the airbag 12 inflates to push (lift) the door-frame moving member 32 upward, as shown in Fig. 3. When the door-frame moving member 32 is lifted, the hooks 38 move in the hook holes 32c relatively downward in the drawing to deform or rupture the partition rods 32f. The instrument panel 20 is ruptured along the tear line 22b, so that the door 24 is separated from the surrounding instrument panel 20. The door 24 is further moved upward together with the door-frame moving member 32 and pushed by the airbag 12, so that the tear line 22a of the door 24 is ruptured. The door 24 and the backing plates 32a and 32a are thus divided into two pieces to right and left in Fig. 2 to be opened like a door and as such, the airbag 12 inflates into the cabin.

Since the door 24 is lifted to be separated from the surrounding instrument panel 20, the door 24 is smoothly opened without receiving deforming reaction from the instrument panel 20.

In this embodiment, the instrument panel 20 is easily ruptured as described above, so that the lifting action and the door opening action are smooth.

With this airbag system, the standing height of the leg frame 34a serving as the leg of the door-frame fixed member 34 is smaller than that of the related art in Figs. 5 to 7. Accordingly, the weight of the door-frame fixed member 34 is small and as such the manufacturing cost is low. Also, in this embodiment, the door-frame moving member 32 and the door-frame fixed member 34 can be molded with one die at the same time because the leg frame 34a of the door-frame fixed member 34 does not reach the hook holes 32c.

## Claims

1. An interior panel including a lid of an airbag system or an instrument panel (20) which covers an airbag (12), the interior panel comprising:
a substrate layer (1), an intermediate layer (2) on the substrate layer (1), and an outer layer (3) on the intermediate layer (2), wherein
the outer layer (3) is made of thermoplastic elastomer containing inorganic powder, **characterized in that** the intermediate layer (2) is made of thermoplastic resin containing rubber or elastomer.

2. The interior panel according to claim 1, wherein the thermoplastic elastomer of the outer layer (3) is a thermoplastic polyolefin.

3. The interior panel according to Claim 1 or 2, wherein the content of the inorganic powder is from 3 to 15 phr (parts per hundred parts resin).

4. An airbag system comprising the interior panel according to one of Claims 1, 2 or 3.

5. The airbag system according to Claim 4, comprising:
the interior panel (20) being part of the interior surface of a vehicle;
a door (24) formed on the interior panel (20) and opened toward the vehicle cabin;
a retainer (10) disposed to face the back of the interior panel (20),
said airbag (12) being accommodated in the retainer (10) in a folded state;
an inflator (14) for inflating the airbag (12); and
a door frame (30) connecting the retainer (10) with the interior panel (20), wherein the door frame (30) includes:
a door-frame moving member (32) having a backing plate (32a) secured to the back of the door (24) and a leg (32b) projecting from the side rim of the backing plate (32a), and
a door-frame fixed member (34) having a flange (34b) secured to the periphery of the door (24) of the interior panel (20) and a leg (34a) projecting from the flange (34b).

## Patentansprüche

1. Innenverkleidung mit einer Abdeckung eines Airbagsystems oder einer Instrumententafel (20), die einen Airbag (12) abdeckt, wobei die Innenverkleidung aufweist:
eine Trägerschicht (1), eine Zwischenschicht (2) auf der Trägerschicht (1) und eine Außenschicht (3) auf der Zwischenschicht (2), wobei die Außenschicht (3) aus thermoplastischem Elastomer hergestellt ist, das anorganisches Pulver enthält, **dadurch gekennzeichnet, daß**
die Zwischenschicht (2) aus thermoplastischem Harz hergestellt ist, das Gummi oder Elastomer enthält.

2. Innenverkleidung nach Anspruch 1, wobei das thermoplastische Elastomer der Außenschicht (3) ein thermoplastisches Polyolefin ist.

3. Innenverkleidung nach Anspruch 1 oder 2, wobei der Gehalt des anorganischen Pulvers 3 bis 15 Teile je einhundert Teile Harz beträgt.

4. Airbagsystem mit der Innenverkleidung nach Anspruch 1, 2 oder 3.

5. Airbagsystem nach Anspruch 4,
wobei die Innenverkleidung (20) Teil der Innenfläche eines Fahrzeugs ist, und mit
einer Klappe (24), die an der Innenverkleidung (20) ausgebildet ist und zum Fahrzeuginnenraum öffnet;
einer Halterung (10), die zur Rückseite der Innenverkleidung (20) weisend angeordnet ist,
wobei der Airbag (12) in der Halterung (10) in zusammengefaltetem Zustand untergebracht ist;
einem Gasgenerator (14) zum Aufblasen des Airbags (12); und
einem Klappenrahmen (30), der die Halterung (10) mit der Innenverkleidung (20) verbindet, wobei der Klappenrahmen (30) aufweist:
ein bewegliches Klappenrahmenteil (32) mit einer Stützplatte (32a), die an der Rückseite der Klappe (24) befestigt ist, und einem Schenkel (32b), der vom Seitenrand der Stützplatte (32a) vorsteht; und
ein feststehendes Klappenrahmenteil (34) mit einem Flansch (34b), der am Umfang der Klappe (24) der Innenverkleidung (20) befestigt ist, und einem Schenkel (34a), der vom Flansch (34b) vorsteht.

## Revendications

1. Panneau intérieur comportant un capot de système de coussin gonflable ou de tableau de bord (20) qui recouvre un coussin gonflable (12), le panneau intérieur comprenant :
une couche de substrat (1), une couche intermédiaire (2) sur la couche de substrat (1) et une couche extérieure (3) sur la couche intermédiaire (2), dans lequel :
la couche extérieure (3) est constituée d'un élastomère thermoplastique contenant une poudre inorganique, **caractérisé en ce que :**
la couche intermédiaire (2) est constituée d'une résine thermoplastique contenant du caoutchouc ou un élastomère.

2. Panneau intérieur selon la revendication 1, dans lequel l'élastomère thermoplastique de la couche extérieure (3) est une polyoléfine thermoplastique.

3. Panneau intérieur selon la revendication 1 ou 2, dans lequel la teneur en poudre inorganique va de 3 à 15 phr (parties pour cent parties de résine).

4. Système de coussin gonflable comprenant le panneau intérieur selon la revendication 1, 2 ou 3.

5. Système de coussin gonflable selon la revendication 4, comprenant :
le panneau intérieur (20) faisant partie de la surface intérieure d'un véhicule ;
une porte (24) formée sur le panneau intérieur (20) et ouvrant sur l'habitacle du véhicule ;
un dispositif de retenue (10) disposé pour faire face au dos du panneau intérieur (20),
ledit coussin gonflable (12) étant logé dans le dispositif de retenue (10) dans un état plié ;
un gonfleur (14) pour gonfler le coussin gonflable (12) ; et
un encadrement de porte (30) reliant le dispositif de retenue (10) au panneau intérieur (20), dans lequel l'encadrement de porte (30) comprend :
un élément mobile d'encadrement de porte (32) comportant une contre-plaque (32a) fixée au dos de la porte (24) et une jambe (32b) faisant saillie du bord latéral de la contre-plaque (32a) ; et
un élément fixe d'encadrement de porte (34) comportant un rebord (34b) fixé à la périphérie de la porte (24) du panneau intérieur (20) et une jambe (34a) faisant saillie du rebord (34b).
